# EUROPEAN PATENT SPECIFICATION

(11) **EP 3 036 416 B1**
(45) Date of publication and mention of the grant of the patent: **25.08.2021**
(21) Application number: 14851172.8
(22) Date of filing: 16.07.2014
(51) Int. Cl.: F02C 3/107, F02C 7/36, F02K 3/06

(54) **HIGH THRUST GEARED GAS TURBINE ENGINE**
GETRIEBEFAN MIT HOHEM SCHUB
MOTEUR À TURBINE À GAZ À ENGRENAGES DE POUSSÉE ÉLEVÉE

(30) Priority: 20.08.2013 US 201361867659 P
(43) Date of publication of application: 29.06.2016
(73) Proprietor: Raytheon Technologies Corporation, Farmington, CT 06032 (US)
(72) Inventor: SCHWARZ, Frederick M., Glastonbury, Connecticut 06033 (US); HASEL, Karl L., Manchester, Connecticut 06040 (US); MERRY, Brian D., Andover, Connecticut 06232 (US)
(74) Representative: Dehns
(86) International application number: PCT/US2014/046781
(87) International publication number: WO 2015/050619

(56) References cited:
- EP-A2- 2 610 461
- US-A1- 2006 053 800
- US-A1- 2009 090 096
- US-A1- 2012 291 449
- US-A1- 2013 025 257
- US-A1- 2013 192 196
- US-A1- 2013 192 200
- Bangalore Philip R. Gliebe ET AL: "Ultra-High Bypass Engine Aeroacoustic Study", NASA/CR-2003-212525, 1 October 2003 (2003-10-01), XP055277347, Retrieved from the Internet: URL:http://ntrs.nasa.gov/archive/nasa/casi .ntrs.nasa.gov/20040000741.pdf [retrieved on 2016-06-02]
- Jack D Mattingly: "Elements of Gas Turbine Propulsion @BULLET", , 1 January 1996 (1996-01-01), XP055531854, Retrieved from the Internet: URL:http://ftp.demec.ufpr.br/foguete/bibli ografia/ELEMENTS%20OF%20GAS%20TURBINE%20PR OPULTION2.pdf [retrieved on 2018-12-07]

## Description

### BACKGROUND

This application relates to a gas turbine engine, wherein a fan is driven through a gear reduction by a fan drive turbine and an overall thrust of the engine is greater than or equal to about 33,000 lbf (146.79 kN).

Gas turbine engines are known and, typically, include a fan which delivers air into a bypass duct as propulsion air. The fan also delivers air into a compressor as core air flow.

The air delivered into the compressors is compressed and delivered into a combustor where it is mixed with fuel and ignited. Products of this combustion pass downstream over turbine rotors driving the turbine rotors to rotate.

Historically, in a two spool engine, a single turbine rotor drove both a low pressure compressor rotor, and a fan, at a constant speed. More recently, a gear reduction placed between the fan and a fan drive turbine. This allows a fan to increase in diameter and rotate at slower speeds than the fan drive turbine.

In another type engine, there are three spools with a separate high pressure turbine driving a high pressure compressor, an intermediate pressure turbine driving a low pressure compressor, and a fan drive turbine driving the fan.

A gas turbine engine having the features of the preamble of claim 1 is disclosed in Gliebe, Philip R., et al, "Ultra-High Bypass Engine Aeroacoustic Study", NASA/CR-2003-212525, October 2003. A further prior art gas turbine engine is disclosed in US 2013/192200 A1.

### SUMMARY

In an aspect of the present invention, a gas turbine engine is provided in accordance with claim 1.

In another embodiment according to any of the previous embodiments, the first compressor rotor and the fan drive turbine rotate in the same direction and at the same speed as each other.

In another embodiment according to any of the previous embodiments, the gear reduction is provided by an epicyclic gear box with at least three idler gears in addition to a sun and ring gear.

In another embodiment according to any of the previous embodiments, the fan turns in the same direction as the fan drive turbine.

In another embodiment according to any of the previous embodiments, the engine results in an overall thrust of greater than or equal to about 33,000 lbf (146.79 kN) at sea level take off at temperatures less than or equal to 86 degrees Fahrenheit (30 °C).

These and other features may be best understood from the following drawings and specification.

### BRIEF DESCRIPTION OF THE DRAWINGS

Figure 1 schematically shows a gas turbine engine.
Figure 2 shows an alternative engine outside the wording of the claims.

### DETAILED DESCRIPTION

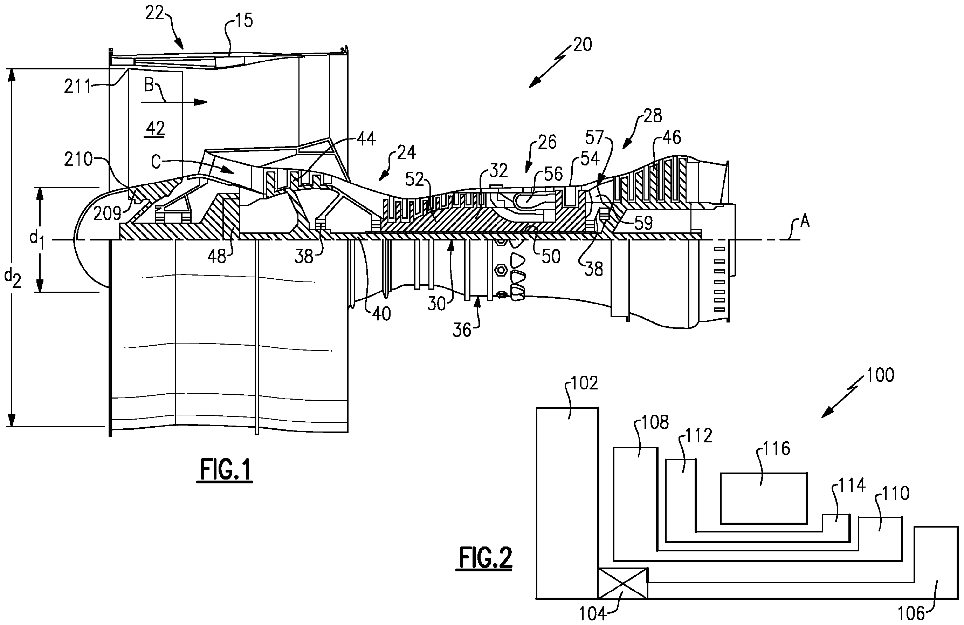

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. The fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle.

A significant amount of thrust is provided by the bypass flow B due to the high bypass ratio. The fan section 22 of the engine 20 is designed for a particular flight condition -- typically cruise at about 0.8 Mach and about 35,000 ft (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}(where °R = K x 9/5). The "Low corrected fan tip speed" as disclosed herein according to one non-limiting embodiment is less than about 1050 ft / second (320.04 m/s).

In embodiments, the gas turbine engine 20 of Figure 1 may deliver a thrust equal to or greater than 33,000 lbf (146.79 kN). This thrust is at sea level take off (SLTO) and at temperatures of 86 degrees Fahrenheit (30 °C) or less.

A fan hub 209 defines an inner flow path for air passing over the fan blades 42 as shown schematically. A ratio of a diameter to an outer surface of the fan hub at a leading edge 210 of the blade d₁ over a diameter d₂ to the outer diameter of the blade tip, again at the leading edge, is greater than or equal to about 0.24 and less than or equal to about 0.38. This allows sufficient air to be provided to the first compressor section 44. The fan tip diameter d₂ in this embodiment is greater than or equal to about 84 inches (213.36 centimeters). Further, a fan tip speed is less than or equal to about 1050 ft / second (320.04 m/s), with the rotational speed of the fan drive turbine being greater than 3 times that of the fan.

A bypass ratio for this embodiment is greater than or equal to about 11. A gear ratio of the gear reduction 48 is greater than or equal to about 3.1. Thus, as indicated, a speed of a fan drive turbine is greater than or equal to 3.1 times the fan speed.

The speed change mechanism 48 may be an epicyclic gear box with three or more idler gears in addition to a sun and ring gear. A number of stages in the low pressure compressor 44 may be between one and five, in the embodiment where the fan drive turbine also drives the low pressure compressor. The low pressure turbine 46 has between three and six stages.

Figure 2 shows an embodiment 100, outside the wording of the claims, wherein a fan rotor 102 is driven by a gear reduction 104, which is, in turn, driven by a fan drive turbine 106. A low pressure compressor 108 is driven by an intermediate pressure turbine 110, and a high pressure compressor 112 is driven by a high pressure turbine 114. A combustor 116 is placed between the high pressure compressor 112 and the high pressure turbine 114. In the engine of Figure 2, outside the scope of the present invention, the low pressure compressor has between five and eleven stages.

The ratio of the diameter to the outer surface of the fan hub at the leading edge to the outer diameter of the blade tip as disclosed in the Figure 1 embodiment would hold true for the Figure 2 embodiment. The same is true for the diameter of the fan tip, as well as the fan tip speed. Further, the gear ratio of the gear reduction 104 is greater than or equal to about 3.1. Also, the gear reduction 104 may be an epicyclic gear box with three or more idler gears, in addition to a sun and ring gear as is the speed change mechanism 48.

The features of the embodiments of Figures 1 and 2 will now be disclosed to achieve the very high thrust of greater than or equal to 33,000 lbf. (146.79 kN) at SLTO.

A performance quantity known as AN² is defined as the exit area of the fan drive turbine times the speed square of the fan drive turbine at SLTO. In an embodiment, the AN² for the fan drive turbine 46 or 106 is greater than or equal to about 4.0 in²-RPM².

A gas turbine engine with the quantities as described above is operable to provide thrust greater than or equal to about 33,000 lbf. (146.79 kN), again at SLTO at temperatures less than or equal to 86 °F (30 °C).

In further embodiments, the fan blades 42 turn in the same direction as the fan drive turbine 46 or 106. The low pressure compressor 44 turns the same direction and speed as the fan drive turbine 46. In the Figure 2 embodiment, the low pressure compressor 108 would rotate at the same direction and speed as the intermediate pressure turbine 110.

In the three spool embodiment, the low pressure compressor 108 will rotate at faster speeds than the fan drive turbine 106.

Although an embodiment of this invention has been disclosed, a worker of ordinary skill in this art would recognize that certain modifications would come within the scope of this disclosure. For that reason, the following claims should be studied to determine the true scope and content of this disclosure.

## Claims

1. A gas turbine engine (20) comprising a fan section (22) driven, via a gear reduction (48), by a fan drive turbine (46) in an engine core, and a high pressure turbine (54), wherein said fan section (22) has a fan hub (209) and a plurality of blades (42) extending radially outwardly of said hub (209) to an outer tip, said fan blade outer tip diameter is greater than or equal to 84 inches (213.36 centimeters), a fan tip speed is, in operation, less than or equal to 1050 ft / second (320.04 meters / second), a bypass ratio, defined as a volume of air delivered by said fan section (22) into a bypass duct as compared to a volume of air delivered by said fan section (22) into said engine core, is greater than or equal to 11.0, the gear ratio of said gear reduction (48) is greater than or equal to 3.1, said fan drive turbine (46) has between three and six stages, and a ratio of an outer diameter of said fan hub (209) at a leading edge of the blades to an outer tip diameter of said blades at the leading edge is greater than or equal to 0.24 and less than or equal to 0.38,
**characterised in that**:
said fan drive turbine (46) also drives a first compressor rotor (44) having between one and five stages, and said gas turbine engine further comprises an engine static structure (36) comprising a mid-turbine frame (57) arranged generally between the high pressure turbine (54) and the fan drive turbine (46), the mid-turbine frame (57) supporting bearing systems (38) and including airfoils (59) in a core airflow path (C).

2. The gas turbine engine as set forth in claim 1, wherein said first compressor rotor (44) and said fan drive turbine (46) rotate in the same direction and at the same speed as each other.

3. The gas turbine engine as set forth in claim 1 or 2, wherein the fan drive turbine (46) is a three-stage turbine.

4. The gas turbine engine as set forth in claim 1, 2 or 3, further comprising an inner shaft (40) connecting the fan section (22) to the first compressor rotor (44) and fan drive turbine (46) through the gear reduction (48), and an outer shaft (50) interconnecting a high pressure compressor (52) and the high pressure turbine (54), wherein the inner shaft (40) and the outer shaft (50) are concentric and rotate via the bearing systems (38) about a central longitudinal axis (A) of the engine (20) which is collinear with longitudinal axes of the inner and outer shafts (40, 50).

5. The gas turbine engine as set forth in any preceding claim, wherein said fan blades (42) turn in the same direction as said fan drive turbine (46).

6. The gas turbine engine as set forth in any preceding claim, wherein said gear reduction (48) is provided by an epicyclic gear box with at least three idler gears in addition to a sun and ring gear.

7. The gas turbine engine as set forth in any preceding claim, the engine (20) resulting in an overall thrust of greater than or equal to 33,000 lbf (146.79 kN) at sea level take off at temperatures less than or equal to 86 degrees Fahrenheit (30 °C).

## Patentansprüche

1. Gasturbinentriebwerk (20), umfassend einen Gebläseabschnitt (22), der über eine Getriebeuntersetzung (48) durch eine Gebläseantriebsturbine (46) in einem Triebwerkskern angetrieben wird, und eine Hochdruckturbine (54), wobei der Gebläseabschnitt (22) eine Gebläsenabe (209) und eine Vielzahl von Schaufeln (42) aufweist, die sich radial auswärts von der Nabe (209) zu einer Außenspitze erstrecken, wobei der Durchmesser der Außenspitze der Gebläseschaufel größer als oder gleich 84 Zoll (213,36 Zentimeter) ist, eine Geschwindigkeit der Gebläsespitze in Betrieb weniger als oder gleich 1050 ft/Sekunde (320,04 Meter/Sekunde) ist, ein Umgehungsverhältnis, definiert als ein Volumen von Luft, die durch den Gebläseabschnitt (22) in einen Umgehungskanal geliefert wird, verglichen mit einem Volumen von Luft, die durch den Gebläseabschnitt (22) in den Triebwerkskern geliefert wird, größer als oder gleich 11,0 ist, das Getriebeverhältnis der Getriebeuntersetzung (48) größer oder gleich 3,1 ist, die Gebläseantriebsturbine (46) zwischen drei und sechs Stufen aufweist, und ein Verhältnis von einem Außendurchmesser der Gebläsenabe (209) an einer Vorderkante der Schaufeln zu einem Durchmesser der Außenspitze der Schaufeln an der Vorderkante größer als oder gleich 0,24 und kleiner als oder gleich 0,38 ist,
**dadurch gekennzeichnet, dass**:
die Gebläseantriebsturbine (46) auch einen ersten Verdichterrotor (44) antreibt, der zwischen einer und fünf Stufen aufweist, und das Gasturbinentriebwerk ferner eine statische Triebwerksstruktur (36) umfasst, die einen Mittelturbinenrahmen (57) umfasst, der im Allgemeinen zwischen der Hochdruckturbine (54) und der Gebläseantriebsturbine (46) angeordnet ist, wobei der Mittelturbinenrahmen (57) Lagersysteme (38) stützt und Schaufelprofile (59) in einem Kernluftströmungsweg (C) beinhaltet.

2. Gasturbinentriebwerk nach Anspruch 1, wobei sich der erste Verdichterrotor (44) und die Gebläseantriebsturbine (46) in die gleiche Richtung und in der gleichen Geschwindigkeit zueinander drehen.

3. Gasturbinentriebwerk nach Anspruch 1 oder 2, wobei die Gebläseantriebsturbine (46) eine dreistufige Turbine ist.

4. Gasturbinentriebwerk nach Anspruch 1, 2 oder 3, ferner umfassend eine Innenwelle (40), die den Gebläseabschnitt (22) mit dem ersten Verdichterrotor (44) und der Gebläseantriebsturbine (46) durch die Getriebeuntersetzung (48) verbindet, und eine Außenwelle (50), die einen Hochdruckverdichter (52) und die Hochdruckturbine (54) miteinander verbindet, wobei die Innenwelle (40) und die Außenwelle (50) konzentrisch sind und sich über die Lagersysteme (38) um eine Längsmittelachse (A) des Triebwerks (20) drehen, die kollinear mit Längsachsen der Innen- und Außenwelle (40, 50) ist.

5. Gasturbinentriebwerk nach einem vorhergehenden Anspruch, wobei sich die Gebläseschaufeln (42) in die gleiche Richtung wie die Gebläseantriebsturbine (46) drehen.

6. Gasturbinentriebwerk nach einem vorhergehenden Anspruch, wobei die Getriebeuntersetzung (48) durch einen epizyklischen Getriebekasten mit zumindest drei Zwischenrädern zusätzlich zu einem Sonnen- und einem Ringrad bereitgestellt ist.

7. Gasturbinentriebwerk nach einem vorhergehenden Anspruch, wobei das Triebwerk (20) zu einem Gesamtschub von mehr als oder gleich 33.000 lbf (146,79 kN) beim Abheben auf Höhe des Meeresspiegels bei Temperaturen von weniger als oder gleich 86 Grad Fahrenheit (30 °C) führt.

## Revendications

1. Moteur à turbine à gaz (20) comprenant une section de soufflante (22) entraînée, via un réducteur (48), par une turbine d'entraînement de soufflante (46) dans un noyau de moteur, et une turbine haute pression (54), dans lequel ladite section de soufflante (22) a un moyeu de soufflante (209) et une pluralité de pales (42) s'étendant radialement vers l'extérieur dudit moyeu (209) jusqu'à une pointe externe, ledit diamètre de pointe externe de pale de soufflante est supérieur ou égal à 84 pouces (213,36 centimètres), une vitesse de pointe de soufflante est, en fonctionnement, inférieure ou égale à 1050 pi/seconde (320,04 mètres/seconde), un taux de dérivation, défini en tant que volume d'air délivré par ladite section de soufflante (22) dans un conduit de dérivation par rapport à un volume d'air délivré par ladite section de soufflante (22) dans ledit noyau de moteur, est supérieur ou égal à 11,0, le rapport d'engrenage dudit réducteur (48) est supérieur ou égal à 3,1, ladite turbine d'entraînement de soufflante (46) a entre trois et six étages, et un rapport entre un diamètre externe dudit moyeu de soufflante (209) au niveau d'un bord d'attaque des pales et un diamètre de pointe externe desdites pales au niveau du bord d'attaque est supérieur ou égal à 0,24 et inférieur ou égal à 0,38,
**caractérisé en ce que** :
ladite turbine d'entraînement de soufflante (46) entraîne également un premier rotor de compresseur (44) ayant entre un et cinq étages, et ledit moteur à turbine à gaz comprend en outre une structure statique de moteur (36) comprenant un châssis de turbine intermédiaire (57) agencé généralement entre la turbine haute pression (54) et la turbine d'entraînement de soufflante (46), le châssis de turbine intermédiaire (57) supportant des systèmes de palier (38) et comportant des profils aérodynamiques (59) dans un chemin d'écoulement d'air central (C) .

2. Moteur à turbine à gaz selon la revendication 1, dans lequel ledit premier rotor de compresseur (44) et ladite turbine d'entraînement de soufflante (46) tournent dans le même sens et à la même vitesse l'un par rapport à l'autre.

3. Moteur à turbine à gaz selon la revendication 1 ou 2, dans lequel la turbine d'entraînement de soufflante (46) est une turbine à trois étages.

4. Moteur à turbine à gaz selon la revendication 1, 2 ou 3, comprenant en outre un arbre interne (40) reliant la section de soufflante (22) au premier rotor de compresseur (44) et à la turbine d'entraînement de soufflante (46) par l'intermédiaire du réducteur (48), et un arbre externe (50) reliant un compresseur haute pression (52) et la turbine haute pression (54), dans lequel l'arbre interne (40) et l'arbre externe (50) sont concentriques et tournent via les systèmes de palier (38) autour d'un axe longitudinal central (A) du moteur (20) qui est colinéaire avec les axes longitudinaux des arbres interne et externe (40, 50).

5. Moteur à turbine à gaz selon une quelconque revendication précédente, dans lequel lesdites pales de soufflante (42) tournent dans le même sens que ladite turbine d'entraînement de soufflante (46).

6. Moteur à turbine à gaz selon une quelconque revendication précédente, dans lequel ledit réducteur (48) est fourni par une boîte de vitesses épicycloïdale avec au moins trois engrenages intermédiaires en plus d'un planétaire et d'une couronne dentée.

7. Moteur à turbine à gaz selon une quelconque revendication précédente, le moteur (20) entraînant une poussée globale supérieure ou égale à 33 000 lbf (146,79 kN) au décollage au niveau de la mer à des températures inférieures ou égales à 86 degrés Fahrenheit (30 °C).
